# EUROPEAN PATENT APPLICATION

(11) **EP 4 636 185 A1**
(43) Date of publication of application: **22.10.2025**
(21) Application number: 24829991.9
(22) Date of filing: 21.03.2024
(51) Int. Cl.: E04B 7/08, E04G 21/14, E04G 21/18, E04B 1/19

(54) **METHOD FOR QUICKLY MOUNTING CURVED KEEL IN CURVED METAL ROOF BASED ON BIM**

(30) Priority: 29.06.2023 CN 202310779802
(71) Applicant: China MCC5 Group Corp.Ltd, Chengdu, Sichuan 610063 (CN)
(72) Inventor: YAO, Ping, Chengdu, Sichuan 610063 (CN); LIU, Zhihua, Chengdu, Sichuan 610063 (CN); ZHOU, Tong, Chengdu, Sichuan 610063 (CN); TAN, Qihou, Chengdu, Sichuan 610063 (CN); LI, Yongshuai, Chengdu, Sichuan 610063 (CN); CHENG, Xu, Chengdu, Sichuan 610063 (CN); LI, Qibing, Chengdu, Sichuan 610063 (CN)
(74) Representative: Ipside
(86) International application number: PCT/CN2024/082869
(87) International publication number: WO 2025/001338

(57) **Abstract**

The present invention relates to the technical field of roof engineering construction, and particularly discloses a BIM-based method for rapidly installing a curved keel in a curved metal roof. The method specifically comprises the following steps: S1, a circular pipe is adopted as a keel, and three positioning lines are arranged on each section of keel in the axial direction of the keel; S2, keel machining is conducted through three positioning lines; S3, spatial position positioning is conducted on the first section of keel on a construction site; S4, an adjustable keel support corresponding to the first section of keel is installed, and the first section of keel is fixed; S5, the second section of keel and the first section of keel are connected and installed; S6, the remaining keels are sequentially installed till all the keels are installed; and S7, panel supports are installed on all the keels. The invention greatly improves the installation efficiency and installation accuracy, thereby effectively reducing construction costs.

## Description

### TECHNICAL FIELD

The present invention relates to the technical field of roof engineering construction, and more specifically, to a BIM (Building Information Modeling)-based method for quickly installing curved keel in curved metal roof.

### BACKGROUND

Landmark large venues not only serve functional purposes, but also carry the role of promoting regional culture. The complex free-form surface of the venue is smooth, suitable for expressing the modern artistic characteristics of the venue. However, for complex free-form metal honeycomb aluminum sheeting roofs, due to their complex and variable geometric curvatures, the metal honeycomb aluminum sheet keel follows the curvature of the roof, forming a spatial curve.

The rectangular pipes are used as the traditional spatial curved keels for easy fixation, which are bent and drawn in two directions to achieve spatial curves; the bidirectional bending and different curvature radii of the keel pose significant difficulties in determining the keel reference line during the bending, drawing and subsequent installation of the keel; in the prior art, when installing, it is usually necessary to first determine the installation position and top elevation of the support by positioning gauging points, and then install the support preliminarily; reinstall the keel, in which the rectangular keel is a spatial curve, and it is necessary to find and determine the bending direction of the rectangular keel; using this method for keel installation is inefficient, with low positioning and installation accuracy.

### SUMMARY

The technical problem to be solved by the present invention is to provide a BIM-based method for quickly installing curved keel in curved metal roof, which greatly improves the installation efficiency and installation accuracy, thereby effectively reducing construction costs;

The technical solution adopted by the present invention to solve the technical problem is:
A BIM-based method for rapidly installing a curved keel in a curved metal roof, specifically comprising the following steps:
S1, a circular pipe is adopted as a keel, and three positioning lines are arranged on each section of keel in the axial direction of the keel;
S2, keel machining is conducted through three positioning lines;
S3, spatial position positioning is conducted on the first section of keel on a construction site;
S4, an adjustable keel support corresponding to the first section of keel is installed, and the first section of keel is fixed;
S5, the second section of keel and the first section of keel are connected and installed;
S6, the remaining keels are sequentially installed till all the keels are installed; and
S7, panel supports are installed on all the keels.

In some possible embodiments,
the three positioning lines include two curved positioning lines arranged along the axial direction of the circular pipe and on the same horizontal plane as the axis of the circular pipe in the length direction, and one positioning nail line arranged along the length direction of the circular pipe and on the same vertical plane as the axis of the circular pipe in the length direction;
the positioning nail line is located above the plane where the two curved positioning lines and the circular tube are located in the length direction.

In some possible embodiments,
the horizontal plane where the two curved positioning lines and the axis of the circular pipe in the length direction are located, is perpendicular to the vertical plane where the positioning nail line and the axis of the circular pipe in the length direction are located.

In some possible embodiments,
the step S3 specifically refers to that,
modeling is conducted by BIM, and the coordinates of three points of the positioning nail line in the first section of keel are exported;
the coordinates of the three points of the positioning nail line in the first section of keel are set out on the construction site, and the spatial position of the first section of keel is positioned on the construction site.

In some possible embodiments,
the step S4 specifically refers to that,
the corresponding adjustable support is installed according to the spatial position of the first section of keel on the construction site;
the two curved positioning lines in the first section of keel are collinear and aligned with the edge of the hoop in the middle of the adjustable support, so that the hoop is sleeved outside the first section of keel, to complete the installation of the first section of keel.

In some possible embodiments,
the step S5 specifically comprises the following steps:
S51, a core insert is arranged at one end of the second section of keel near the first section of keel, the core insert is inserted into the first section of keel, and the three positioning lines are aligned;
S52, modeling is conducted by BIM, the coordinates of two points of the positioning nail line in the second section of keel are exported, and the second section of keel is positioned on the construction site; and
S53, the corresponding adjustable support is installed according to the position of the second section of keel on the construction site, and the two curved positioning lines are aligned with the upper edge of the hoop in the middle of the adjustable support based on the three positioning lines as the installation baselines, so that the hoop is sleeved outside the second section of keel, to complete the installation of the second section of keel.

In some possible embodiments,
the distance between the end faces of two adjacent sets of keels that are close to each other is 8-10mm.

In some possible embodiments,
the step S7 specifically refers to that,
the hoop at the bottom of the panel support is sleeved on the keel, so that the edge of the hoop is aligned with the curved positioning line.

In some possible embodiments,
the keel machining in the S2 is to bend and draw the keel; specifically referring to that, bending and drawing are conducted by taking two sets of curved positioning lines and the axis of the circular pipe in the length direction as the bending plane, and the positioning nail line as the bending normal.

In some possible embodiments,
the three points of the positioning nail line in the first section of keel are respectively arranged at both ends and in the middle of the first section of keel;
the coordinates of the two points of the positioning nail line in the second section of keel are arranged at the end of the second section of keel away from the first section of keel and in the middle of the second section of keel, respectively.

Compared with the prior art, the beneficial effects of the present invention are:
When using the present invention for bending and drawing circular pipes, the bending and drawing normal is determined by three positioning lines, and the bending and drawing normal is used to control the bending and drawing in all directions to complete the machining of the keel;
When installing the keel using the present invention, after determining the positioning points of the circular pipe positioning nail line through setting out, the established positioning line is used as the installation baseline. Only the curved positioning line of the circular pipe needs to be aligned with the upper edge of the middle hoop of the already positioned adjustable support to quickly complete the installation of the keel;
The present invention utilizes the flexible adjustment of the positioning nail line of the circular pipe and the adjustable support, and can quickly complete the connection between the intermediate keel connection system and the keel that has not yet been accurately determined in terms of scale elevation. It efficiently solves the problem of difficult installation and positioning of the keel, greatly improving the installation efficiency and installation accuracy;
The present invention utilizes three positioning lines on a circular pipe to provide a baseline reference for the installation of subsequent panel supports.

### BRIEF DESCRIPTION OF THE DRAWINGS

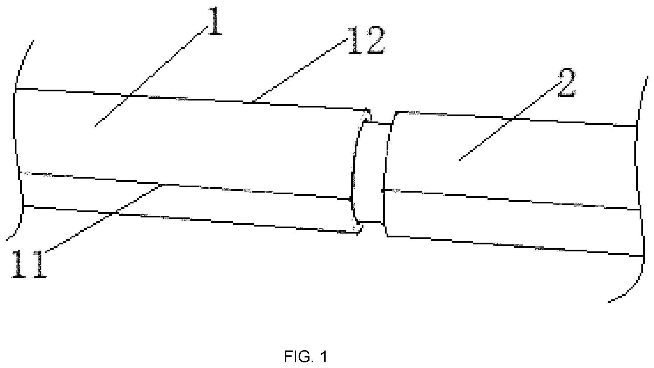

Fig. 1 is a schematic diagram of the insertion of the first section of keel and the second section of keel in the present invention;
where: 1. first section of keel; 11. curved positioning line; 12. top nail line; 2. second section of keel.

### DETAILED DESCRIPTION OF THE EMBODIMENTS

In the present invention, unless otherwise specified and defined explicitly, the terms "installation", "linking", "connection" and "fixing" shall be comprehend in a broad sense, for example, it can be fixed connection, and can also be removable connection, or integrated; can be direct linking, and can be indirect linking through an intermediary, or connection in two elements or interaction with each other between two element. The terms "first," "second," and the like as mentioned in this application do not denote any order, quantity, or importance, but are used only to distinguish different components. Similarly, the terms "one" or "one piece" do not indicate a quantitative limitation, but the presence of at least one. In the present embodiment, the term "and/or" in this application describes an association relationship for describing associated objects and represents that three relationships may exist. For example, A and/or B may represent the following three cases: Only A exists, both A and B exist, and only B exists. In the description of the present embodiment, "multiple" means two or more, unless otherwise specified. For example, multiple registration masts refer to two or more registration masts. For an ordinary person skilled in the art, the specific implications of the above terms in the present invention may be comprehended in accordance with specific conditions.

Below is a detailed explanation of the present invention.

As shown in Fig. 1:
A BIM-based method for rapidly installing a curved keel in a curved metal roof, specifically comprising the following steps:
S1, a circular pipe is adopted as a keel, and three positioning lines are arranged on each section of keel in the axial direction of the keel;
   Preferably, the circular pipe is a metal pipe, which is further made of aluminum alloy;
   wherein, the three positioning lines include two curved positioning lines 11 arranged along the axial direction of the circular pipe and on the same horizontal plane as the axis of the circular pipe in the length direction, and one positioning nail line 12 arranged along the length direction of the circular pipe and on the same vertical plane as the axis of the circular pipe in the length direction;
   the positioning nail line 12 is located above the plane where the two curved positioning lines 11 and the circular tube are located in the length direction.
   the horizontal plane where the two curved positioning lines 11 and the axis of the circular pipe in the length direction are located, is perpendicular to the vertical plane where the positioning nail line 12 and the axis of the circular pipe in the length direction are located.
S2, keel machining is conducted through three positioning lines;
   the keel machining in the S2 is to bend and draw the keel; specifically referring to that, bending and drawing are conducted by taking two sets of curved positioning lines 11 and the axis of the circular pipe in the length direction as the bending plane, and the positioning nail line 12 as the bending normal.
S3, spatial position positioning is conducted on the first section of keel 1 on a construction site; specifically referring to that,
   modeling is conducted by BIM, and the coordinates of three points of the positioning nail line 12 in the first section of keel 1 are exported;
   the coordinates of the three points of the positioning nail line 12 in the first section of keel 1 are set out on the construction site, and the spatial position of the first section of keel is positioned on the construction site.
   Preferably, when the first section of keel 1 is installed, the first section of keel 1 is positioned by selecting the coordinates of three points; the three points are selected from both ends and the middle of the positioning nail line 12;
S4, an adjustable keel support corresponding to the first section of keel 1 is installed, and the first section of keel is fixed; specifically referring to that,
   the corresponding adjustable support is installed according to the spatial position of the first section of keel 1 on the construction site;
   the two curved positioning lines 11 in the first section of keel 1 are collinear and aligned with the edge of the hoop in the middle of the adjustable support, so that the hoop is sleeved outside the first section of keel 1, to complete the installation of the first section of keel 1.
S5, the second section of keel 2 and the first section of keel 1 are connected and installed; specifically comprising the following steps:
   S51, a core insert is arranged at one end of the second section of keel 2 near the first section of keel 1, the core insert is inserted into the first section of keel 1, and the three positioning lines are aligned;
      the distance between the end faces of two adjacent sets of keels that are close to each other is 8-10mm; that is, two adjacent sets of keels will form a gap of 8-10mm near one end, thus avoiding deformation of the keels caused by thermal expansion;
      after the core insert of the second section of keel 2 is inserted with the first section of keel 1, the positioning of the second section of keel 2 near one end of the first section of keel 1 is achieved;
   S52, modeling is conducted by BIM, the coordinates of two points of the positioning nail line 12 in the second section of keel 2 are exported, and the second section of keel 2 is positioned on the construction site;
      Preferably, since the end of the second section of keel 2 near the first section of keel 1 has already been positioned by the first section of keel 1, multiple points on the second section of keel 2 include a point located at the end of the second section of keel 2 away from the first section of keel 1 and a point located in the middle of the second section of keel 2; by coordinating these two points with the first section of keel 1, the positioning of the second section of keel 2 on the construction site can be achieved; this will reduce the measurement of the positioning points for the second section of keel 2, thereby effectively accelerating construction efficiency and reducing construction costs.
   S53, the corresponding adjustable support is installed according to the position of the second section of keel 2 on the construction site, and the two curved positioning lines 11 are aligned with the upper edge of the hoop in the middle of the adjustable support based on the three positioning lines as the installation baselines, so that the hoop is sleeved outside the second section of keel 2, to complete the installation of the second section of keel 2.
S6, S5 is repeated and the remaining keels are sequentially installed till all the keels are installed; and
S7, panel supports are installed on all the keels; specifically referring to that,
   the hoop at the bottom of the panel support is sleeved on the keel, so that the edge of the hoop is aligned with the curved positioning line.

Using the present invention for curved roof construction, on one hand, when bending and drawing circular pipes, the bending and drawing normal is determined by three positioning lines, and the bending and drawing normal is used to control the bending and drawing in all directions to complete the machining of the keel;
When installing the keel using the present invention, after determining the positioning points of the circular pipe positioning nail line 12 through setting out, the established positioning line is used as the installation baseline. Only the curved positioning line 11 of the circular pipe needs to be aligned with the upper edge of the middle hoop of the already positioned adjustable support to quickly complete the installation of the keel; meanwhile, the flexible adjustment of the positioning nail line 12 of the circular pipe and the adjustable support can be used to quickly complete the connection between the intermediate keel connection system and the keel that has not yet been accurately determined in terms of scale elevation. It efficiently solves the problem of difficult installation and positioning of the keel, greatly improving the installation efficiency and installation accuracy. Meanwhile, three positioning lines on the keel provide a baseline reference for the installation of subsequent panel supports.

The present invention is not limited to the detailed description of the preferred embodiments mentioned above. The present invention expands to any new feature or any new combination disclosed in the Description, and steps in any new method or process or any new combination disclosed.

## Claims

1. A BIM-based method for rapidly installing a curved keel in a curved metal roof, **characterized by** specifically comprising the following steps:
S1, a circular pipe is adopted as a keel, and three positioning lines are arranged on each section of keel in the axial direction of the keel;
S2, keel machining is conducted through three positioning lines;
S3, spatial position positioning is conducted on the first section of keel on a construction site;
S4, an adjustable keel support corresponding to the first section of keel is installed, and the first section of keel is fixed;
S5, the second section of keel and the first section of keel are connected and installed;
S6, the remaining keels are sequentially installed till all the keels are installed; and S7, panel supports are installed on all the keels.

2. The BIM-based method for rapidly installing a curved keel in a curved metal roof according to claim 1, **characterized in that**, the three positioning lines include two curved positioning lines arranged along the axial direction of the circular pipe and on the same horizontal plane as the axis of the circular pipe in the length direction, and one positioning nail line arranged along the length direction of the circular pipe and on the same vertical plane as the axis of the circular pipe in the length direction; the positioning nail line is located above the plane where the two curved positioning lines and the circular tube are located in the length direction.

3. The BIM-based method for rapidly installing a curved keel in a curved metal roof according to claim 2, **characterized in that**, the horizontal plane where the two curved positioning lines and the axis of the circular pipe in the length direction are located, is perpendicular to the vertical plane where the positioning nail line and the axis of the circular pipe in the length direction are located.

4. The BIM-based method for rapidly installing a curved keel in a curved metal roof according to claim 3, **characterized in that**, the S3 specifically refers to that:
modeling is conducted by BIM, and the coordinates of three points of the positioning nail line in the first section of keel are exported;
the coordinates of the three points of the positioning nail line in the first section of keel are set out on the construction site, and the spatial position of the first section of keel is positioned on the construction site.

5. The BIM-based method for rapidly installing a curved keel in a curved metal roof according to claim 4, **characterized in that**, the S4 specifically refers to that:
the corresponding adjustable support is installed according to the spatial position of the first section of keel on the construction site;
the two curved positioning lines in the first section of keel are collinear and aligned with the edge of the hoop in the middle of the adjustable support, so that the hoop is sleeved outside the first section of keel, to complete the installation of the first section of keel.

6. The BIM-based method for rapidly installing a curved keel in a curved metal roof according to claim 5, **characterized in that**, the S5 specifically comprises the following steps:
S51, a core insert is arranged at one end of the second section of keel near the first section of keel, the core insert is inserted into the first section of keel, and the three positioning lines are aligned;
S52, modeling is conducted by BIM, the coordinates of two points of the positioning nail line in the second section of keel are exported, and the second section of keel is positioned on the construction site; and
S53, the corresponding adjustable support is installed according to the position of the second section of keel on the construction site, and the two curved positioning lines are aligned with the upper edge of the hoop in the middle of the adjustable support based on the three positioning lines as the installation baselines, so that the hoop is sleeved outside the second section of keel, to complete the installation of the second section of keel.

7. The BIM-based method for rapidly installing a curved keel in a curved metal roof according to claim 5, **characterized in that**,
the distance between the end faces of two adjacent sets of keels that are close to each other is 8-10mm.

8. The BIM-based method for rapidly installing a curved keel in a curved metal roof according to claim 6, **characterized in that**, the S7 specifically refers to that:
the hoop at the bottom of the panel support is sleeved on the keel, so that the edge of the hoop is aligned with the curved positioning line.

9. The BIM-based method for rapidly installing a curved keel in a curved metal roof according to any of claims 3-8, **characterized in that**, the keel machining in the S2 is to bend and draw the keel; specifically referring to that, bending and drawing are conducted by taking two sets of curved positioning lines and the axis of the circular pipe in the length direction as the bending plane, and the positioning nail line as the bending normal.

10. The BIM-based method for rapidly installing a curved keel in a curved metal roof according to claim 6, **characterized in that**, the three points of the positioning nail line in the first section of keel are respectively arranged at both ends and in the middle of the first section of keel; and
the coordinates of the two points of the positioning nail line in the second section of keel are arranged at the end of the second section of keel away from the first section of keel and in the middle of the second section of keel, respectively.
